# EUROPEAN PATENT APPLICATION

(11) **EP 4 254 966 A1**
(43) Date of publication of application: **04.10.2023**
(21) Application number: 23161569.1
(22) Date of filing: 13.03.2023
(51) Int. Cl.: H04N 21/242, H04N 13/296, H04N 21/43, H04N 21/8547

(54) **A METHOD, APPARATUS AND COMPUTER PROGRAM FOR SYNCHRONIZING VIDEO FRAMES CAPTURED BY MULTIPLE CAMERAS**

(30) Priority: 30.03.2022 GB 202204568
(71) Applicant: Sony Group Corporation, Tokyo 108-0075 (JP)
(72) Inventor: WITT, Sarah, Basingstoke, RG22 4SB (GB); PORTER, Rob Mark Stefan, Basingstoke, RG22 4SB (GB); CHEN, Jian-Rong, Basingstoke, RG22 4SB (GB)
(74) Representative: D Young & Co LLP

(57) **Abstract**

The present disclosure relates to a method for synchronizing video frames captured by multiple cameras, the method comprising the steps of capturing a first machine readable visual representation displayed on at least one display device by each of the multiple cameras, wherein the first machine readable visual representation represents a reference clock value; receiving from each of the multiple cameras a video stream by a switcher device, wherein the video stream includes an image of the first machine readable visual representation captured by the camera, and each frame of the video stream is associated with a streaming timestamp; and calibrating the streaming timestamp of the video stream received from the corresponding camera based on the image of the first machine readable visual representation contained in the video stream.

## Description

### BACKGROUND

### Field of the Disclosure

The present technique relates to a method, apparatus and computer program for video processing of live video broadcasting or streaming.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

Video broadcasting of live events such as sports programs, arts performances, award shows, talk shows and reality programs usually involves multi-camera systems in which at least two cameras simultaneously capture a scene to provide close-up shots, wider master shot, and shots from different camera angles. The images captured by the multiple cameras are transmitted to a video switcher which allows the director or editor to choose between the feeds from individual cameras, combine the feeds, mix the soundtrack, add video captions and special effects, and finally create a master output for broadcasting or recording.

It is often necessary to synchronise the images captured live from the multiple cameras in order to maintain the continuity between the switching of camera angles or to ensure the synchronization of multiple video clips in Picture-in-Picture (PiP) videos. Time coherence is especially important if the cameras are pointing at the same scene with fast-moving subjects, such as figure skaters executing spinning movements, or Formula One cars racing at 220 MPH in a Grand Prix. Switching between unsynchronised cameras will undesirably result in an obvious time jump in the video. In a worst case scenario, an important moment of the event might be skipped because of the incoherent switching. It is desirable to have the cameras in a multi-camera system synchronised to within a single video frame.

The synchronization of video streams is performed by using the timestamps embedded in streamed video frames, but even if two cameras are both "synchronised" to a common clock source, such as Network Time Protocol (NTP), the implementation difference leading to, for example, capture, processing and network delays may still cause a difference of several frames between timestamps of images that were captured simultaneously. This applies to streaming cameras using various different streaming protocols, for instances, HTTP Live Streaming (HLS), and Real-Time Messaging Protocol (RTMP).

It is an aim of embodiments of the present disclosure to at least address this issue.

### SUMMARY

According to the disclosure, there is provided a method for synchronizing video frames captured by multiple cameras, the method comprising the steps of: capturing a first machine readable visual representation displayed on at least one display device by each of the multiple cameras, wherein the first machine readable visual representation represents a reference clock value; receiving from each of the multiple cameras a video stream by a switcher device, wherein the video stream includes an image of the first machine readable visual representation captured by the camera, and each frame of the video stream is associated with a streaming timestamp; and calibrating the streaming timestamp of the video stream received from the corresponding camera based on the image of the first machine readable visual representation contained in the video stream.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS.

A more complete appreciation of the disclosure and many of the attendant advantages thereof will be readily obtained as the same becomes better understood by reference to the following detailed description when considered in connection with the accompanying drawings, wherein:
Figure 1 describes a multi-camera system according to embodiments of the disclosure;
Figure 2 describes the video switcher of Figure 1 according to embodiments of the disclosure;
Figure 3 describes the display device of Figure 1 according to embodiments of the disclosure;
Figure 4 describes an example content displayed by the display device of Figure 1 for synchronizing multiple cameras in a multi-camera system according to embodiments of the disclosure;
Figure 5A describes an example scenario in which synchronization of multiple cameras is performed in a multi-camera system according to some embodiments of the disclosure;
Figure 5B describes an example scenario in which synchronization of multiple cameras is performed by using a first visual representation and a second visual representation according to some embodiments of the disclosure;
Figure 6 describes a data structure for the storage of timing offsets with respect to different cameras in a multi-camera system according to embodiments of the disclosure;
Figure 7 describes the synchronization unit of Figure 2 according to embodiments of the disclosure;
Figure 8 describes a signal flow diagram of an example method for synchronizing multiple cameras in a multi-camera system according to embodiments of the disclosure;
Figure 9A describes an example scenario of applying the timing parameters to synchronize multiple cameras in a multi-camera system according to embodiments of the disclosure;
Figure 9B describes the synchronization of video streams from multiple cameras according to embodiments of the disclosure in the example scenario of Figure 9A;
Figure 10 describes a multi-camera system according to other embodiments of the disclosure;
Figure 11 describes a signal flow diagram of an example method for synchronizing multiple cameras in a multi-camera system according to other embodiments of the disclosure; and
Figure 12 shows a flow chart describing a process of synchronizing video frames captured by multiple cameras in a multi-camera system according to embodiments of the disclosure.

### DESCRIPTION OF THE EMBODIMENTS

Referring now to the drawings, wherein like reference numerals designate identical or corresponding parts throughout the several views.

The present disclosure provides a multi-camera system which allows synchronization of the images captured from multiple cameras to within a single video frame. The synchronization is performed by using a display device, such as a computer, a tablet or a mobile phone, to periodically generate and display a visual representation of reference clock information. The image of the visual representation is captured by each of the multiple cameras which then generates video streams feeding to a video switcher. Based on the visual representation in the video streams output by the individual cameras, the video switcher decodes the reference clock information contained in each frame image, detects the update of the reference clock information, and compares the streaming timestamps of the video streams from different cameras for the moments when the reference clock information is updated. The timing parameters for a particular camera, comprising time offset and time delay, can be obtained through the comparison and will be stored in the memory of the video switcher. During live broadcasting, the video switcher automatically synchronizes the video streams from individual cameras by adjusting the streaming timestamp of each video stream based on the stored time offset of the relevant camera and then using buffering to delay individual camera streams as required, based on the stored time delay of the relevant camera, so that the adjusted timestamps of each stream match at the point they are switched. According to embodiments of the disclosure, the video switcher may be a hardware device or a software installed in a general purpose computer, for receiving and editing the video streams captured by individual cameras, for instances, choosing, mixing the video streams, and/or applying effects to create one or more outputs for real-time video broadcast or recording.

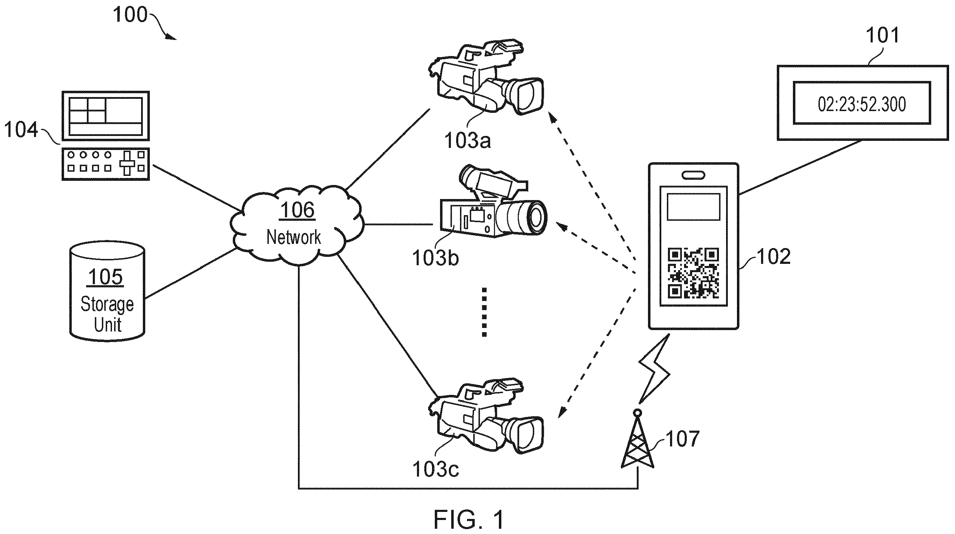

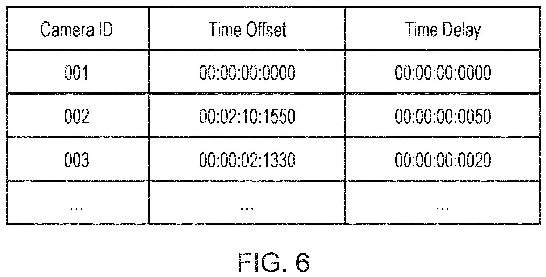

Figure 1 is a schematic diagram illustrating a multi-camera system 100 according to embodiments of the disclosure in which the video frames captured by multiple cameras may be automatically synchronized. The synchronization process performed by the multi-camera system 100 may involve a time source 101, a display device 102, a plurality of cameras 103a-103c, a video switcher (switcher device) 104, a storage unit 105, a network 106 and a base station 107. During the synchronization process according to embodiments of the disclosure, the time source 101 provides reference clock information, such as a local system clock, a time server on a network, or a Global Positioning System master clock based on time signal received from a GPS satellite). The display device 102 receives from the time source 101 a signal containing the reference clock information and generates a visual representation of the reference clock information. According to embodiments of the disclosure, the visual representation of the reference clock information is a machine readable code, such as a graphic code, a data matrix code, a Quick Response (QR) code or a bar code. According to embodiments of the disclosure, the visual representation of the reference clock information is human readable but can be recognized by machines using image processing techniques. The visual representation displayed by the display device 102 is captured by the plurality of cameras 103a-103c, as represented by the dotted arrows in Figure 1. Although Figure 1 shows only three cameras, any number of cameras is envisaged. The video switcher 104 receives from each of the multiple cameras 103a, 103b, 103c a video stream which captures the visual representation of the reference clock information. The video streams may be transmitted in known video formats, for example, 4K 2160p, 4K 2160PsF, 1080p, 1080i, 1080PsF or 720p. Each frame in the video streams is associated with a streaming timestamp based on an internal clock of the respective cameras 103a-103c. The video switcher 104 may be connected with the multiple cameras 103a-103c through the wired or wireless network 106. According to embodiments of the disclosure, the video switcher 104 may be separately connected with individual cameras 103a-103c through direct connection based on wired connection (such as optical fibre cable) or wireless connection. The video switcher 104 decodes the reference clock information contained in the video streams from different cameras 103a-103c and detects the frames in which the reference clock information is completely updated. The video switcher 104 automatically calculates the time offset for each of the multiple cameras 103a-103c by comparing the streaming timestamps of the video streams from different cameras with respect to the frames when the reference clock information is updated. The time offsets may be stored in a storage unit 105, as will be explained later with reference to Figure 6. The storage unit 105 is, in embodiments, either a magnetically readable storage medium or a solid state storage medium but the disclosure is not limited. For example, the storage unit 105 may be located outside of the video switcher 104 and may be connected to the video switcher 104 via the network 106, such as a network attached storage (NAS), or may be located on the cloud.

Once the video switcher 104 has obtained the time offsets for the cameras 103a-103c, it sends a feedback signal to the display device 102 notifying that the synchronization process for the cameras 103a-103c has been completed. The video switcher 104 may send the feedback signal to the display device 102 through a wireless network, such as a base station 107 of a cellular network, or a wireless router of a wireless local area network or wide area network. The user may subsequently perform video streaming using the multiple cameras 103a-103c, and the video switcher 104 may calibrate the streaming timestamp of video streams received from the cameras 103a-103c based on the time offsets stored in the storage unit 105.

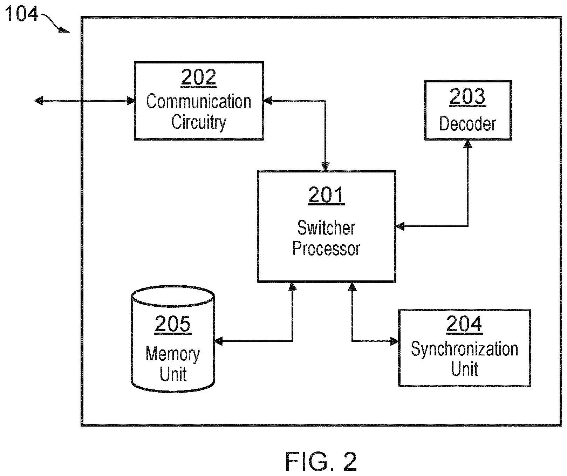

Figure 2 shows a schematic block diagram illustrating the video switcher 104 of Figure 1 according to embodiments of the disclosure, for receiving and synchronizing video streams captured by multiple cameras 103a-103c. The video switcher 104 comprises a switcher processor 201. The switcher processor 201 is embodied as processing circuitry such as a microprocessor or an Application Specific Integrated Circuit or another circuit design and controls the operation of the video switcher 104 using a computer program which is embodied as software code, for example, a receiving software. The video switcher 104 is controlled by the switcher processor 201 to perform embodiments of the disclosure. A memory unit 205 is connected to the switcher processor 201 and stores thereon computer-readable instructions which control the switcher processor 201.

Additionally connected to the switcher processor 201 is communication circuitry 202. The communication circuitry 202 may include a network adapter for connecting the video switcher 104 to the network 106. The network 106 to which the video switcher 104 is connected via the network adapter may be a wide area network, such as the Internet, or may be a local area network or the like. The purpose of the network adapter is to send and receive data from various devices such as the cameras 103a-103c, the storage unit 105, and the display device 102. The communication circuitry 202 may additionally comprise a digital video interface, such as Serial Digital Interface (SDI), for receiving high bitrate video streams from cameras at various locations of the scene.

Additionally connected to the switcher processor 201 is a decoder 203 for obtaining the reference clock information from the visual representation which is captured by the multiple cameras 103a-103c and transmitted to the switcher processor 201. The visual representation of the reference clock information may be a machine readable code, such as a graphic code, a data matrix code, a Quick Response (QR) code or a bar code, in which case the decoder 203 comprises decoding algorithms for locating the machine readable code in the video frame and decoding reference clock information. According to embodiments of the disclosure, the visual representation of the reference clock information is human readable such as an analogue clock or digital clock image, in which case the decoder 203 comprises image recognition algorithms for recognizing and interpreting the clock image in the video frame based on image processing techniques. According to embodiments of the disclosure, the human readable visual representation of the reference clock information may be displayed in addition to the machine readable visual representation.

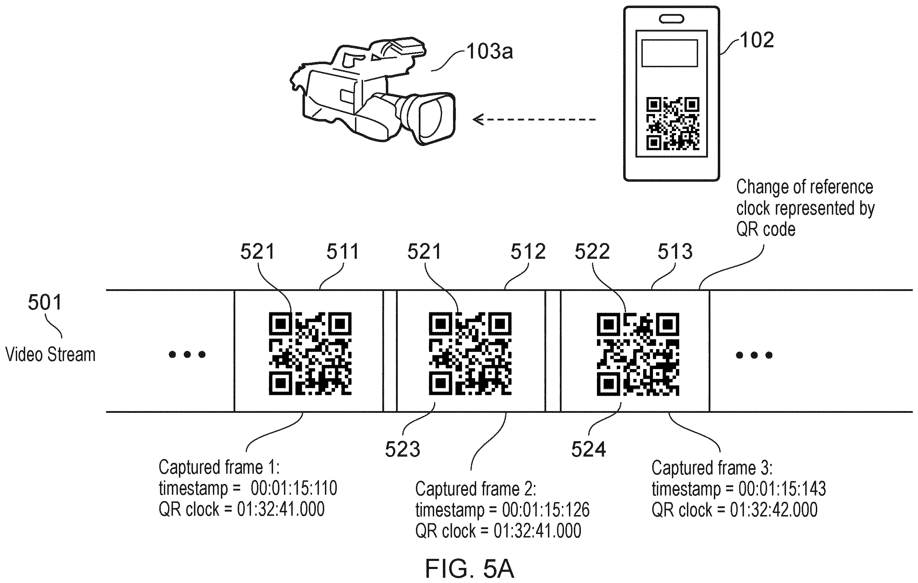

Finally, a synchronization unit 204 is connected to the switcher processor 201 for synchronizing the video streams from individual cameras. The synchronization unit 204 computes the time offsets for each camera from the synchronization process and adjust the timestamps of subsequent video streams accordingly, which will be described later with reference to Figures 5A and 5B, 6, 7, 8, 9Aand 9B.

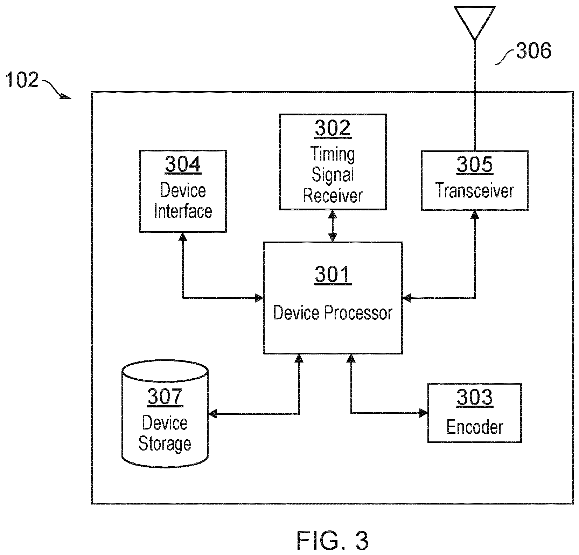

Figure 3 describes the display device 102 of Figure 1 according to embodiments of the disclosure for generating visual representations which allow video frames captured by multiple cameras 103a-103c to be synchronized. The display device 102 is controlled by a device processor 301. The device processor 301 may be embodied as a microprocessor or an Application Specific Integrated Circuit or other processing circuitry. The device processor 301 operates in accordance with computer readable software code that is located on device storage 307. Device storage 307 may be embodied as solid state storage medium or a magnetically readable storage medium. Alternatively, device storage 307 may be located remotely to the user device 102 such as being located on the cloud and may be accessible over the internet.

Additionally connected to the device processor 301 is timing signal receiver 302. The purpose of the timing signal receiver 302 is to allow the display device 102 to receive timing signal from a remote time source 101. According to embodiments of the disclosure, the timing signal receiver 302 may be a GPS receiver module for receiving location and time data from multiple satellites transmitted using high frequency radio signals, for example ranging from 1 to 1.5 GHz. The satellites may contain an atomic clock to provide high precision satellite timestamp. Signals from the satellites may comprise orbital data of the satellite and satellite timestamp when the signals are sent. The GPS receiver module possesses the signals received from multiple satellites to calculate the accurate time and location of the display device 102. For instances, a GPS receiver module based on the GPS Standard Positioning Service (SPS) is committed to provide time transfer accuracy of less than 30 nanoseconds. The accurate time calculated by the GPS receiver module will be taken as the reference clock information for the multi-camera system 100.

Additionally connected to device processor 301 is an encoder 303. The purpose of the encoder 303 is to generate a visual representation of the reference clock information calculated by the timing signal receiver 302. According to embodiments of the disclosure, the visual representation of the reference clock information is a machine readable code, such as a graphic code, a data matrix code, a Quick Response (QR) code or a bar code. According to embodiments of the disclosure, the visual representation of the reference clock information is human readable but can be recognized by machines using image processing techniques.

Additionally connected to device processor 301 is a device interface 304. The purpose of the device interface 304 is to display the visual representation of the reference clock information generated by the encoder 303. The visual representation is displayed in a size and a resolution that allow it to be captured by the multiple cameras 103a-103c. In the meantime, the device interface 304 further allows a user to interact with the display device 102. For example, a user may wish to interact with the display device 102 to start the synchronization process using a touch screen. In this case, the device interface 304 may be a touch screen such as a capacitive touch screen or a resistive type touch screen.

Additionally connected to the device processor 301 is a transceiver 305 for transmitting and receiving radio waves through an antenna 306. The purpose of the transceiver 305 is to allow the display device 102 to wirelessly communicate with the video switcher 104 or other display devices over the network 106 or in a point-to-point relationship. The transceiver 305 may therefore receive feedback signal from the video switcher 104, or communicate with other display devices for synchronizing the internal clock. Specifically, it is envisaged that the display device 102 will be a device that connects to the video switcher 104 or other display devices through a wireless network, such as a base station 107 of a cellular network, or a wireless router of a wireless local area network or wide area network.

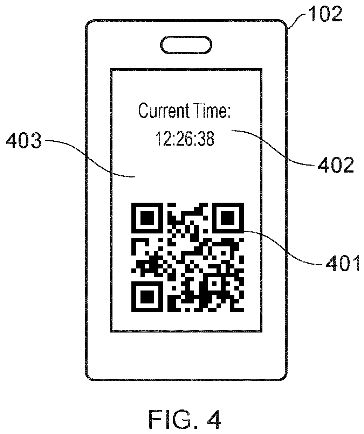

Figure 4 describes an example content displayed by the display device 102 of Figure 1 for synchronizing multiple cameras 103a-103c in the multi-camera system 100 according to embodiments of the disclosure. When the user starts the camera synchronization process, he may interact with the display device 102, for example, by launching a software installed in the display device 102. The device processor 301 then instructs the timing signal receiver 302 to calculate reference clock information based on timing signals received from the remote time source 101. The device processor 301 further instructs the encoder to generate a visual representation of the reference clock information, for example in the form of a machine readable code. Finally, the device processor 301 instructs the device interface 304 to display the machine readable code to be captured by the cameras for synchronization purpose.

Additionally, the display device 102 may display visual representation of the reference clock information which is human readable, such as an analogue clock or digital clock image 402. The clock image 402 allows the user to double check the reference clock information. According to embodiments of the disclosure, the clock image itself may provide reference clock information to the video switcher 104 which includes image processing algorithms to recognize and interpret the clock image.

Additionally, the display device 102 may refresh the machine readable code and clock image 402 periodically, for example once per second. According to embodiments of the disclosure, the completed refresh of machine readable code 401 and clock image 402 may be accompanied with a change of the display background 403. The change of the display background 403 may be a change of background colour or a change of background pattern image. According to embodiments of the disclosure, the completed refresh of machine readable code 401 and clock image 402 may be accompanied with an audio signal generated by the device interface 304. The audio signal may be audio tones, such as single tone signalling or dual tone multi-frequency signalling, which can be readily decoded by an audio processing algorithm contained in the video switcher 104. The change of display background or the generation of audio signal allows the switcher to detect the completed refresh of the machine readable code 401 without having to decode every frame of the machine readable code as this can require significant processing power: detecting the change of background or detecting the audio signal is a simpler operation and can be performed in real-time with less processing power.

Figure 5A illustrates an example scenario in which synchronization of multiple cameras 103a-103c is performed in a multi-camera system 100 according to some embodiments of the disclosure. The user launches the synchronization software in the display device 102 and moves the display device 102 to outdoors or close to a window in order to get a strong GPS signal reception (although this is not necessary if a GPS signal can be received indoors). In some embodiments, GPS signal reception may be triggered by the user tapping on user interface elements such as a button displayed on the touch screen of the display device 102. Upon receiving the reference clock information via the GPS signal, the software updates the current time of the display device and displays it in the forms of a machine readable code such as a QR code, and a clock image. The displayed machine readable code and clock image will be refreshed periodically, such as once per second, driven by the system clock on the display device 102. The system clock is accurate enough to maintain the displayed time to be within the tolerance over a reasonable period of time. The user then points a camera 103a at the display device 102 to capture the displayed machine readable code. The camera 103a subsequently transmits the video stream 501 together with streaming timestamp, such as RTP timestamp or MPEG PTS, to the video switcher 104. The video stream 501 comprises video frames 511-513, respectively capturing the machine readable codes 521, 522 and the display backgrounds 523, 524 at consecutive moments, for example, every 16.67ms for a frame rate at 60 frame per second.

For the purpose of synchronization, the video stream 501 needs to capture at least one change of the machine readable code on the display device 102, for example, from machine readable code 521 in frames 511 and 512, to machine readable code 522 in frame 513 (between two consecutive frames) as shown in Figure 5A.

The video switcher 104 may include a receiving software for processing the video stream 501. The receiving software may detect and decode the reference clock information from the video picture capturing the machine readable code. By decoding the reference clock information embedded in the machine readable code and comparing the streaming timestamp of the video streams from different cameras 103a-103c for the moments when the reference clock information is updated, the receiving software will establish a time offset for each of the cameras 103a-103c.

Specifically, time offsets refer to the difference between the time indicated by the machine-readable clock and the timestamps of the corresponding video frames taken by each of the cameras 103a-103c, which may be caused by variation of the system clock in the cameras. Multiple cameras 103a-103c shoot at the display device 102 at the same time or at different times and capture the refreshing of the machine readable code, for instance, machine readable code 521 changing to machine readable code 522. Referring to the video stream 501 recorded by the camera 103a, the machine readable code 521 is updated to machine readable code 522 in video frame 513 with timestamp t₁. The video switcher decodes the reference clock information from the updated machine readable code 522 in video frame 513 and determines that the refresh of the machine readable code occurred at timestamp t₁. Assuming the time represented by the machine-readable code 522 is time T₁, the time offset for camera 103a can be calculated as (t₁-T₁).

The time offset TO for every camera 1 to N is mathematically expressed as:
TOᵢ = tᵢ - Tᵢ fori = 1, 2, ..., N where
Tᵢ is the time represented by the machine readable code captured on camera i, and
tᵢ is the corresponding timestamp of camera i associated with the refresh of machine readable code

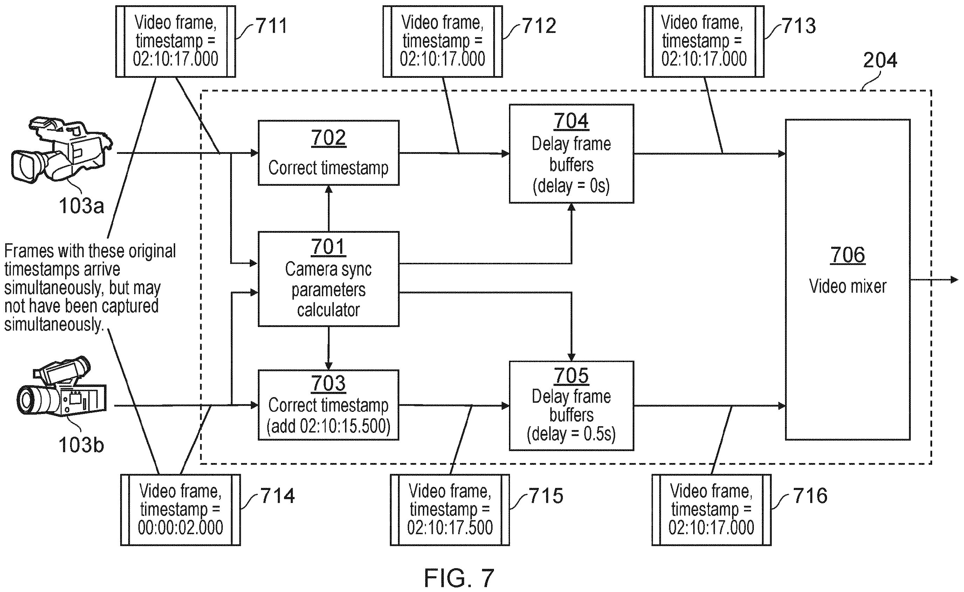

The value of time offset, TOᵢ is used for correcting the timestamp for camera i in the steady-state during live broadcasting, which will be explained later with reference to Figures 7, 8, 9A and 9B.

The capturing of machine readable code by the cameras does not have to be performed simultaneously but can be done independently by individual cameras, at different times. In other words, the time Tᵢ represented by the machine readable code captured on different cameras 1 to N may have different values.

The time offset calculated from a single capture of machine readable code refresh may not lead to accurate synchronization to within a single video frame. For example, there could be some variation in the time it takes for the reference clock to be updated and for the new machine readable code to be rendered on the display device screen. In addition, there could be some variation in the time between the machine readable code being updated and this being captured by the camera due to the shuttering of the camera.

According to embodiments of the disclosure, the synchronization accuracy may be improved by running the whole process of capturing a change in the machine readable code and calculating the time offset several times, and then using the average of all the calculated offsets to synchronize the video streams. This has the effect of averaging out the effect of the variation and results in a more accurate offset being calculated. For example, a plurality of additional time offsets are obtained by repeatedly capturing additional machine readable code by the multiple cameras and calculating additional time offsets for each of the multiple cameras based on the additionally captured machine readable visual representations. The plurality of time offsets obtained for each of the multiple cameras are subsequently averaged and the averaged time offset will be used to correct the timestamp for the corresponding camera in the steady-state during live broadcasting, which will be explained later with reference to Figures 7, 8, 9A and 9B.

When the time offset is successfully calculated, the receiving software of the video switcher 104 will notify the operator, who will then notify the camera operator through a talk back channel that the synchronization process is completed and normal recording can take place. In some embodiments, the video switcher 104 will automatically send a feedback signal to the display device 102 notifying that the camera 103a has been synchronized. The synchronization process is repeated for other cameras 103b-103c in the multi-camera system 100. When the respective time offsets for all cameras 103a-103c have been obtained, the video switcher 104 will be able to align the streaming timestamps of the video streams from different cameras.

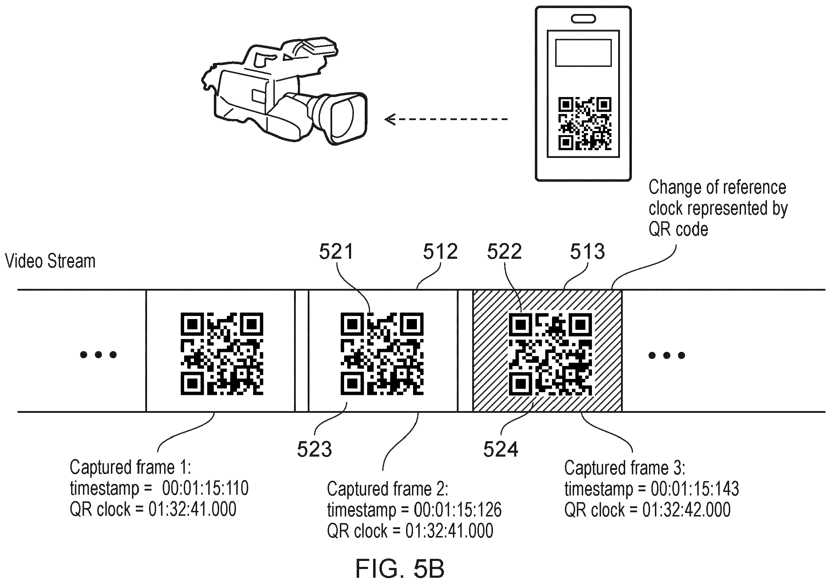

Figure 5B illustrates an example scenario in which synchronization of multiple cameras 103a-103c is performed by using a first visual representation and a second visual representation according to some embodiments of the disclosure. The first visual representation refers to the visual representation of the reference clock information. The completed change of the first visual representation, such as from machine readable code 521 to machine readable code 522, may be accompanied with a change of a second visual representation, such as alternating display background 523 in frame 512 to display background 524 in frame 513. The change of display background allows the switcher to detect the completed refresh of the reference clock without having to decode every frame of the machine-readable code as this can require significant processing power: detecting the change of background is a simpler operation and can be performed in real-time with less processing power. It also makes it easier for the switcher to pinpoint the exact frame in which the machine-readable code updates and can result in more accurate frame synchronisation. The reference clock information can be obtained in advance by decoding the machine readable code contained in earlier video frames before the refresh occurs.

Figure 6 illustrates a data structure for the storage of the timing parameters which are, in embodiments, a database. The data structure is stored in the memory unit 205 of the video switcher 104 or in the storage unit 105. The purpose of storing the timing parameters is to adjust the timestamps of video streams received from the cameras 103a-103c and to align the video streams in the time domain, as will be explained later. The time offsets TO and time delays TD are stored in correspondence with a unique camera identifier.

Figure 7 is a schematic block diagram illustrating the synchronization unit 204 of Figure 2 according to embodiments of the disclosure. During the set up stage, the camera synchronization parameters calculator 701 receives video streams of machine readable code captured by cameras 103a and 103b and computes the time offset TO, as discussed above with reference to Figures 5A and 5B. The time offset may then be stored in the camera synchronization parameters calculator 701, in the memory unit 205 of the video switcher 104, or in the storage unit 105. During the steady-state, the cameras 103a and 103b respectively capture the scene of the event and transmit video streams to the switcher 104. In some embodiments, the synchronization process includes two stages. The first stage is to correct the timestamps as the internal clock of the cameras for generating the timestamps may not be synchronized. After timestamp correction, the frames captured simultaneously by different cameras for the same moment of the scene will have the same timestamp. The second stage is to add delay to the video streams as frames that are captured simultaneously may not arrive simultaneously from different cameras, so the video frames that arrived earlier need to be delayed to match the latest arrivals. In some embodiments, the delay can be applied before the timestamp correction.

Referring to Figure 7, the synchronization unit 204 receives video streams from the cameras 103a and 103b and corrects the timestamp of the video frames respectively by the timestamp correction units 702 and 703, which retrieve the time offset TO of the relevant camera from the camera synchronization parameters calculator 701, the memory unit 205, or the storage unit 105, and add the same to the timestamp of the video frames. For example, the video frame 714 in the video stream captured by camera 103b has an initial timestamp 00:00:02.000, which is then corrected to 02:10:17.500 in video frame 715 by the timestamp correction unit 703 adding the time offset for camera 103b, i.e.: 02:10: 15.500. On the other hand, the camera 103a has timestamps that are matched to the clock in the machine-readable code generator so the corresponding time offset has a zero value. The timestamp correction unit 702 therefore makes no adjustment to the timestamp of the video stream captured by 103a, and video frames 711, 712 have the same timestamp.

According to embodiments of the disclosure, a more accurate synchronization may be achieved by adopting an average time offset as described above. The average time offset may be computed by averaging a plurality of additional time offsets which are obtained by repeatedly capturing additional machine readable code by the multiple cameras and calculating additional time offsets for each of the multiple cameras based on the additionally captured machine readable visual representations. The timestamp correction unit subsequently adds the averaged time offset to the streaming timestamp of the video stream received from the corresponding camera to correct the streaming timestamp.

The synchronization unit 204 subsequently adds time delay TD to the video streams by delay frame buffers 704 and 705, based on the difference between the timestamps of the video frames 715 and 712 in order to align the video frames in the time domain. The time delay TD may then be stored in the camera synchronization parameters calculator 701, or in the memory unit 205 of the video switcher 104. In some embodiments, the time delays TD may be stored in a storage unit 105, as previously described with reference to Figure 6. In some embodiments, it is not necessary to continuously calculate the time delays for every video frame. Since the time delay for each camera stays the same after the camera is set up, the same time delay may be used for the whole broadcasting program or may be updated at regular time intervals.

For example, after timestamp correction, the video frame 712 from camera 103a has a smaller timestamp 02: 10: 17.000 comparing to the corrected timestamp 02:10:17.500 of video frame 715, camera 103a may therefore be chosen as the reference camera. The video frame 715 in the video stream captured by camera 103b is delayed by 0.5 second at the delay frame buffer 705, which is the timestamp difference with respect to the video frame 712 from the reference camera 103a. Therefore, at the same time as the video frame 715 is being written to the delay frame buffers 705, a frame 716 with timestamp 02:10:17.000 (that was written into the delay frame buffer 705 half a second earlier) is read from the delay frame buffer 705. On the other hand, the camera 103a is the reference camera which has the smallest timestamp value after timestamp correction. The delay frame buffer 704 therefore adds no delay to the video stream captured by 103a, and video frames 712, 713 have the same timestamp.

Finally, the video mixer 706 edits and combines the synchronized video frames 713 and 716 according to the instructions from the user to create a master output.

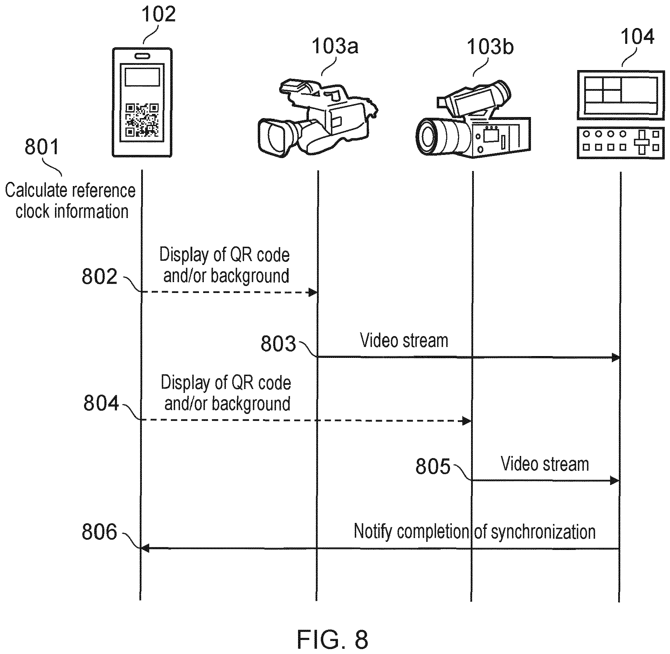

Figure 8 illustrates a signal flow diagram of an example method for synchronizing multiple cameras 103a-103c in the multi-camera system 100 according to embodiments of the disclosure. In step 801, the display device 102 calculates the reference clock information for the multi-camera system. The reference clock information may be based on a local system clock, a time server on a network, or a GPS master clock. In step 802, the display device 102 periodically generates a visual representation, such as a machine readable code, of the latest reference clock information and displays the visual representation to the camera 103a. The capturing of the visual representation by the camera 103a is represented by dotted arrows in Figure 8. In some embodiments, the change of machine readable code may be accompanied with a change of the display background, as previously described in Figure 5B. In step 803, the camera 103a captures the continually updating visual representation on the display device 102 and send a video stream to the video switcher 104. Each video frame of the video stream is associated with a streaming timestamp, such as RTP timestamp or MPEG PTS. In step 804, display device 102 displays the continually updating visual representation to the camera 103b. In step 805, the camera 103b captures the visual representation on the display device 102 and send a video stream to the video switcher 104. After receiving the video streams from the cameras 103a, 103b, the video switcher 104 automatically calculates the time offset for each camera based on the reference clock information decoded from the visual representation and timestamp accompanied with the video streams. In step 806, the video switcher 104 sends feedback signal to the display device 102 notifying the user that the synchronization process for the cameras 103a, 103b has been completed.

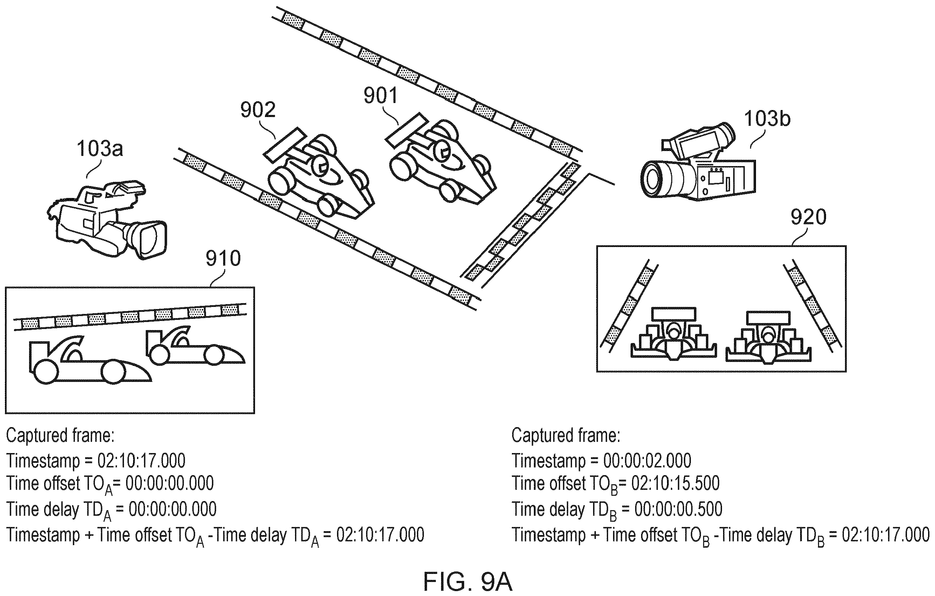

Figure 9A illustrates an example scenario of applying the timing parameters to synchronize multiple cameras in a multi-camera system according to embodiments of the disclosure. The multi-camera system 100 deploys two cameras 103a and 103b for the capturing of a Grand Prix event. The timing parameters have been obtained for each of the cameras using the synchronization method as previously described. In order to align the video streams from different cameras, the video switcher after receiving the video streams will automatically adjust the timestamp of the video streams by adding time offset of the corresponding camera to the timestamp and delaying the video streams by time delay TD of the corresponding camera. The video switcher then edits and combines the video streams to create a master output for broadcasting or recording based on the adjusted timestamp. In the example scenario, video frame 920 is received from camera 103b capturing the moment when the formula one cars 901, 902 are approaching the finish line. The video frame 920 is initially assigned by the camera 103b with the timestamp 00:00:02.000. The video switcher then adjusts the timestamp by adding the time offset TO_{B} 02:10:15.500 and applying the time delay TD_{B} 00:00:00.500 for camera 103b so that the timestamp becomes 02:10:17.000. On the other hand, video frame 910 is received from camera 103a capturing the same moment at the finish line. The video frame 910 is initially assigned by the camera 103a with the timestamp 02:10:17.000. Timestamp correction and delay buffering is not required since the time offset TO_{A} and time delay TD_{A} for camera 103a are both zero. As a result, both the timestamps for frames 910 and 920 have been aligned as 02:10:17.000.

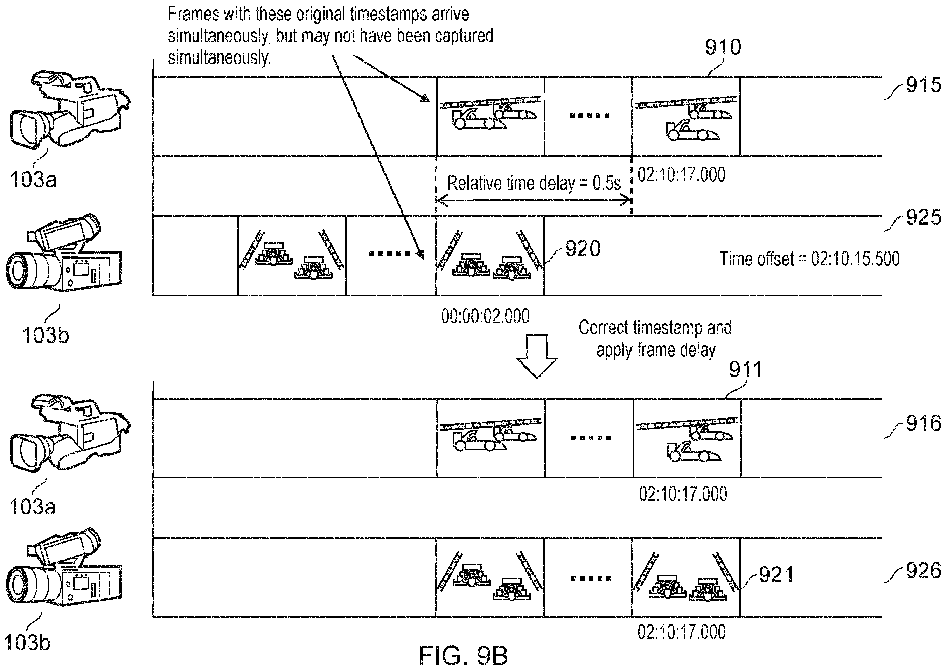

Figure 9B describes the synchronization of video streams from multiple cameras 103a and 103b according to embodiments of the disclosure in the example scenario of Figure 9A. The cameras 103a and 103b respectively capture the scene from different angles and transmit video streams to the switcher. Due to implementation difference leading to, for example, camera capturing, video processing, and transmission delays, the video frames in video streams 915, 925 which arrive at the switcher simultaneously may not have been captured by the corresponding cameras simultaneously. For example, the video frame 910 captured by camera 103a arrives later than the video frame 920 captured by camera 103b by a time delay of 0.5 second. Furthermore, since the internal clock of the cameras 103a and 103b are not synchronized, the timestamp of video frame 910 has a value 02:10:17.000 which differs from the timestamp 00:00:02.000 of video frame 920 by a time offset of 02:10:15.500.

After correcting the timestamps and applying frame delay, the video frames 911 and 921 in the video streams 916 and 926 which were simultaneously captured by the corresponding cameras 103a and 103b become aligned in the time axis. The timestamps of the video frames 911 and 921 are also consistent with each other, i.e.: 02:10:17:000.

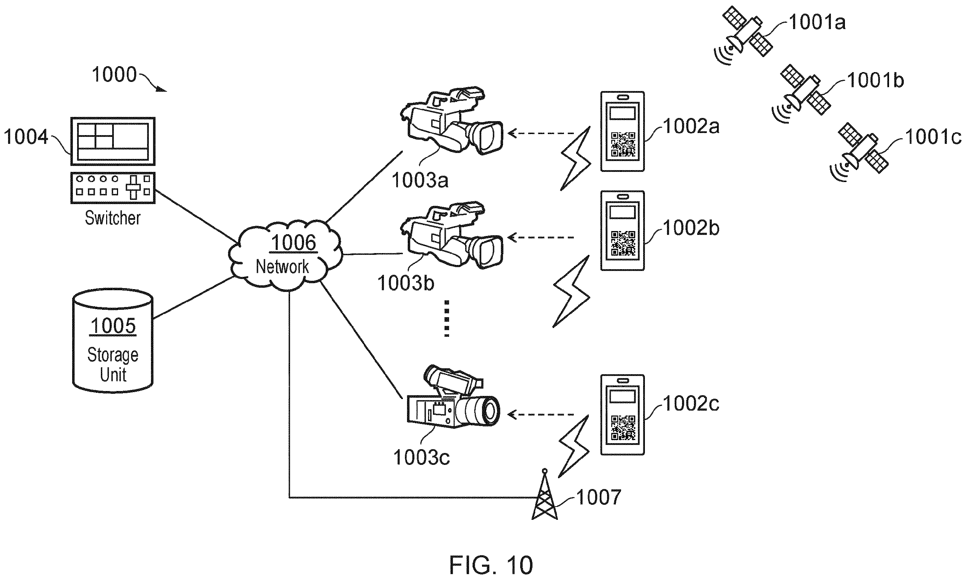

Figure 10 is a schematic diagram illustrating a multi-camera system 1000 according to some embodiments of the disclosure in which synchronization is performed by using multiple display devices to respectively display the visual representation of reference clock information to different cameras. This allows cameras located at different locations to be synchronized which is particularly beneficial for synchronizing cameras for an event held at a larger venue. The use of multiple display devices also advantageously speeds up the synchronization process. The synchronization process performed by the multi-camera system 1000 may involve a common time source, such as GPS signals from multiple satellites 1001a-1001c, a plurality of display device 1002a-1002c, a plurality of cameras 1003a-1003c, a video switcher 1004, a storage unit 1005, a network 1006 and a base station 1007. During the synchronization process according to embodiments of the disclosure, the common time source 1001 provides reference clock information, such as a local system clock, a time server on a network, or a Global Positioning System master clock based on time signal received from a GPS satellite). The display devices 1002a-1002c receive from the common time source 1001 a signal containing the reference clock information and separately generate a visual representation of the reference clock information. According to embodiments of the disclosure, the visual representation of the reference clock information is a machine readable code, such as a graphic code, a data matrix code, a Quick Response (QR) code or a bar code. According to embodiments of the disclosure, the visual representation of the reference clock information is human readable but can be recognized by machines using image processing techniques. The visual representations displayed by the display device 1002a-1002c are respectively captured by the plurality of cameras 1003a-1003c. In some embodiments, the display device 1002a-1002c may present the visual representations to the plurality of cameras 1003a-1003c at the same time so that the reference clock information represented by the visual representations captured by respective cameras 1003a-1003c are the same. In some other embodiments, the display device 1002a-1002c may present the visual representations to the plurality of cameras 1003a-1003c at different times such that the reference clock information represented by the visual representations captured by respective cameras 1003a-1003c are different. Although Figure 10 shows only three display devices and three cameras, any number of display devices and cameras is envisaged and multiple cameras may share one display device. The video switcher 1004 receives from each of the multiple cameras 1003a-1003c a video stream which captures the visual representation of the reference clock information. The video streams may be transmitted in known video formats, for example, 4K 2160p, 4K 2160PsF, 1080p, 1080i, 1080PsF or 720p. Each frame in the video streams is associated with a streaming timestamp based on an internal clock of the respective cameras 1003a-1003c. The video switcher 1004 may be connected with the multiple cameras 1003a-1003c through the wired or wireless network 1006. According to embodiments of the disclosure, the video switcher 1004 may be separately connected with individual cameras 1003a-1003c through direct connection based on wired connection (such as optical fibre cable) or wireless connection. The video switcher 1004 decodes the reference clock information contained in the video streams from different cameras 1003a-1003c and detects the frames in which the reference clock information is updated. The video switcher 1004 automatically calculates the time offset for each of the multiple cameras 1003a-1003c by comparing the streaming timestamps of the video streams from different cameras with respect to the frames when the reference clock information is updated. The time offsets may be stored in a storage unit 1005, as previously described with reference to Figure 6. The storage unit 1005 is, in embodiments, either a magnetically readable storage medium or a solid state storage medium but the disclosure is not limited. For example, the storage unit 1005 may be located outside of the video switcher 1004 and may be connected to the video switcher 1004 via the network 1006, such as a network attached storage (NAS), or may be located on the cloud.

Once the video switcher 1004 has obtained the time offsets for the cameras 1003a-1003c, it sends feedback signals to the display devices 1002a-1002c notifying that the synchronization process for the corresponding cameras 1003a-1003c has been completed. The switcher 1004 may send the feedback signals to the display devices 1002a-1002c through a wireless network, such as a base station 1007 of a cellular network, or a wireless router of a wireless local area network or wide area network. The user may subsequently perform video streaming using the multiple cameras 1003a-1003c, and the switcher 1004 may calibrate the streaming timestamp of video streams received from the cameras 1003a-1003c based on the time offsets stored in the storage unit 1005.

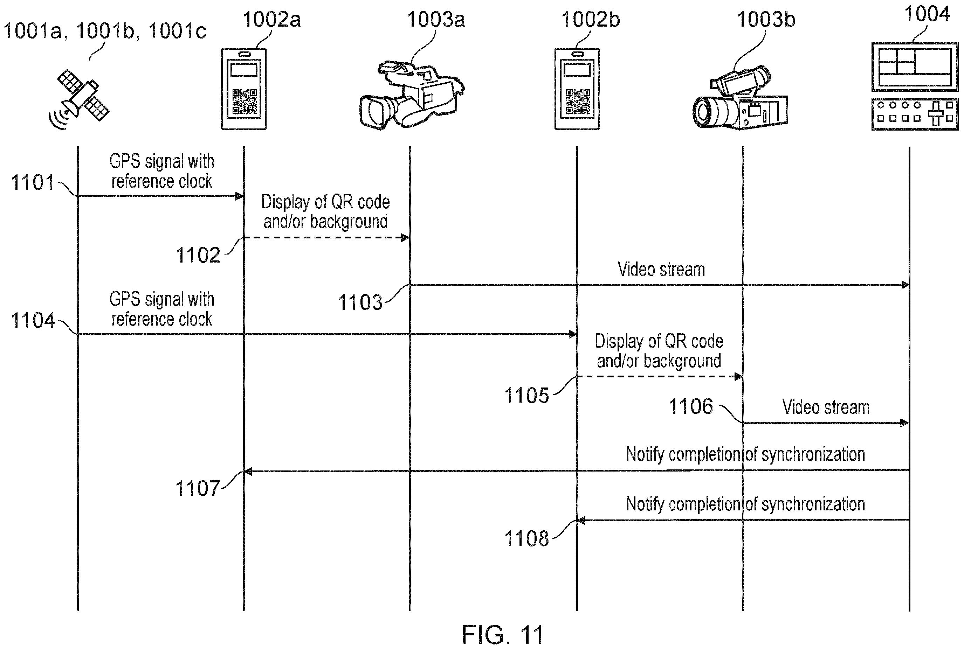

Figure 11 illustrates a signal flow diagram of an example method of synchronizing multiple cameras 1003a-1003c in the multi-camera system 1000 according to some embodiments of the disclosure. In step 1101, the display device 1002a receives GPS signals from multiple satellites 1001a-1001c. Based on the location and time data contained in the GPS signals, the display device 1002a synchronizes its internal clock with other display devices and calculates the global reference clock information for the multi-camera system. In step 1102, the display device 1002a periodically generates a visual representation, such as a machine readable code, of the latest global reference clock information and displays the visual representation to the camera 1003a. The periodical update of the visual representation in display device 1002a is executed, for example, at the start of every second of the synchronized internal clock of the display device 1002a. In some embodiments, the change of machine readable code may be accompanied with a change of the display background, as previously described in Figure 5B. In step 1103, the camera 1003a captures the continually updating visual representation on the display device 1002a and send a video stream to the video switcher 1004. Each video frame of the video stream is associated with a streaming timestamp, such as RTP timestamp or MPEG PTS.

In step 1104, another display device 1002b receives GPS signals from multiple satellites 1001a-1001c. Based on the location and time data contained in the GPS signals, the display device 1002b synchronizes its internal clock with other display devices and calculates the global reference clock information for the multi-camera system. In step 1105, the display device 1002b periodically generates a visual representation, such as a machine readable code, of the latest global reference clock information and displays the visual representation to the camera 1003b. The periodical update of the visual representation in display device 1002b is executed, for example, at the start of every second of the synchronized internal clock of the display device 1002b. In some embodiments, the change of machine readable code may be accompanied with a change of the display background, as previously described in Figure 5B. In step 1106, the camera 1003b captures the continually updating visual representation on the display device 1002b and send a video stream to the video switcher 1004.

After receiving the video streams from the cameras 1003a and 1003b, the video switcher 1004 decodes the global reference clock information contained in the video streams from cameras 1003a and 1003b and detects the frames in which the global reference clock information is updated. The video switcher 1004 automatically calculates the time offset for each camera by comparing the streaming timestamps of the video streams from different cameras with respect to the frames when the global reference clock information is updated. In steps 1107 and 1108, the video switcher 1004 respectively sends feedback signals to the display devices 1002a, 1002b notifying the operators that the synchronization process for the corresponding cameras 1003a, 1003b has been completed.

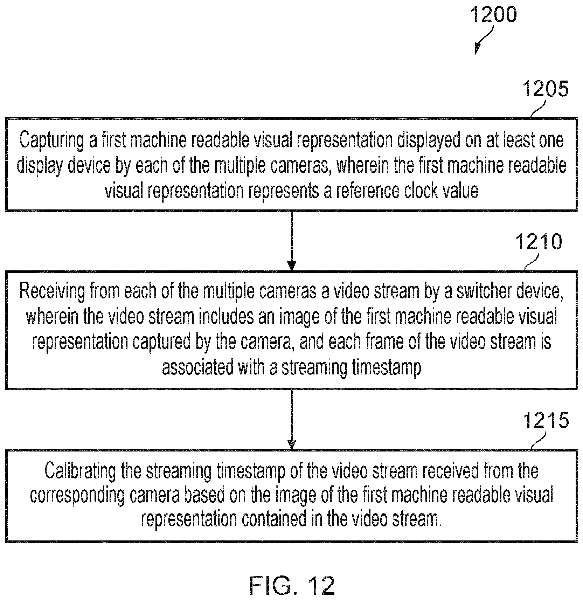

Figure 12 shows a flow chart describing a computerized process 1200 of synchronizing video frames captured by multiple cameras in a multi-camera system according to embodiments of the disclosure. Process 1200 may begin at step 1205, where a camera in the multi-camera system may capture a first machine readable visual representation displayed on at least one display device by each of the multiple cameras, wherein the first machine readable visual representation represents a reference clock value. For example, the camera may capture the first machine readable visual representation displayed by a computer, a tablet or a mobile phone. In some embodiments, the first machine readable visual representation may be a machine readable code, such as a graphic code, a data matrix code, a Quick Response (QR) code or a bar code. In some embodiments, the first machine readable visual representation is periodically generated by the display devices. In some embodiments, the display device may display a second machine readable visual representation, which is associated with the first machine readable visual representation. For example, the second machine readable visual representation can be the display background of the display device which invokes a background colour change or a background pattern change upon a completed change of the first machine readable visual representation. The completed change of the first machine readable visual representation can be quickly detected by the switcher device based on a change of the second machine readable visual representation.

At step 1210, the video switcher receives from each of the multiple cameras a video stream of the first machine readable visual representation to a switcher device, wherein the video stream includes an image of the first machine readable visual representation captured by the camera, and each frame of the video stream is associated with a streaming timestamp. In some embodiments, the streaming timestamp may be a RTP timestamp, a Decoding Timestamp (DTS), a MPEG Presentation Timestamp (PTS), or a MPEG Composition Timestamp (CTS).

At step 1215, the switcher device calibrates the streaming timestamp of the video stream received from the corresponding camera based on the image of the first machine readable visual representation contained in the video stream. In some embodiments, the switcher device performs the calibration by detecting a completed change of the image of the first machine readable visual representation contained in each video stream, and calculating a time offset for each of the multiple cameras by evaluating the difference between the streaming timestamps of the video streams from the multiple cameras with respect to the frames in which the decoded reference clock value is changed. The switcher device may then notify the display device of the result of calibration. If the calibration is successful, the time offset will then added to the streaming timestamp of the subsequent video stream received from the corresponding camera.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent embodiments of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors. The different units, circuitry and/or processors may be physically distributed across any distance. The disclosed embodiments may also be implemented based on processing and storage units located in a remote system, such as in the Cloud.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally be described by the following numbered clauses:
1. A method for synchronizing video frames captured by multiple cameras, the method comprising the steps of:
   capturing a first machine readable visual representation displayed on at least one display device by each of the multiple cameras, wherein the first machine readable visual representation represents a reference clock value;
   receiving from each of the multiple cameras a video stream by a switcher device, wherein the video stream includes an image of the first machine readable visual representation captured by the camera, and each frame of the video stream is associated with a streaming timestamp; and
   calibrating the streaming timestamp of the video stream received from the corresponding camera based on the image of the first machine readable visual representation contained in the video stream.
2. The method according to clause 1, wherein the reference clock value is received by the at least one display device from a common time source.
3. The method according to any preceding clause, wherein the first machine readable visual representation is periodically generated by the at least one display device.
4. The method according to any preceding clause, wherein the step of calibrating the streaming timestamp of the video stream further comprises:
   decoding by the switcher device the reference clock value from the image of the first machine readable visual representation contained in each video stream;
   detecting by the switcher device a change of the decoded reference clock value contained in each video stream; and
   calculating a time offset for each of the multiple cameras by evaluating the difference between the streaming timestamps of the video streams from the multiple cameras with respect to the frames in which the decoded reference clock value is changed.
5. The method according to clause 4, further comprising the steps of:
   adding the calculated time offset to correct the streaming timestamp of the video stream received from the corresponding camera;
   calculating a time delay for each of the multiple cameras by evaluating the difference between the corrected streaming timestamps of the video frames simultaneously received from the multiple cameras; and
   applying the time delay to the video stream received from the corresponding camera based on the calculated time delay.
6. The method according to clause 4, further comprising the steps of:
   obtaining a plurality of additional time offsets by repeatedly capturing additional machine readable visual representations by the multiple cameras and calculating additional time offsets for each of the multiple cameras based on the additionally captured machine readable visual representations;
   averaging the plurality of time offsets obtained for each of the multiple cameras; and
   adding the averaged time offsets to correct the streaming timestamp of the video stream received from the corresponding camera.
7. The method according to any preceding clause, further comprising the step of:
   displaying on the display device a second machine readable visual representation which is associated with the first machine readable visual representation,
   wherein a completed change of the first machine readable visual representation is detected by the switcher device based on a change of the second machine readable visual representation.
8. The method according to clause 7, wherein the second machine readable visual representation is the display background of the display device and changes upon a completed change of the first machine readable visual representation.
9. The method according to any preceding clause, further comprising the step of:
   generating an audio signal by the display device which is associated with the first machine readable visual representation,
   wherein a completed change of the first machine readable visual representation is detected by the switcher device based on the audio signal.
10. The method according to any preceding clause, wherein the first machine readable visual representation is a graphic code, a data matrix code, a Quick Response code or a bar code.
11. The method according to any preceding clause, wherein the time source is a local system clock, a time server on a network, or a Global Positioning System master clock.
12. The method according to any preceding clause, further comprising the step of notifying the display device of the result of calibration.
13. A computer program product comprising computer readable instructions which, when loaded onto a computer, configure the computer to perform a method according to any preceding clause.
14. A switcher device, comprising:
   a receiving unit for acquiring video streams from multiple cameras, wherein each video stream captures a first machine readable visual representation displayed on a display device; wherein the first machine readable visual representation represents a reference clock value received by the display device from a time source and is periodically generated by the display device; wherein each frame of the video stream is associated with a streaming timestamp;
   a decoder for decoding the reference clock value from the first machine readable visual representation contained in each video stream;
   a detecting unit for detecting a change of the first machine readable visual representation in each video stream; and
   a subtracting unit for calculating a time offset for each of the multiple cameras by evaluating the difference between the streaming timestamps of the video streams from the multiple cameras with respect to the frames in which the decoded reference clock value is changed.
15. The switcher device according to clause 14, further comprising:
   a calibrating unit for adding the calculated time offset to correct the streaming timestamp of the video stream received from the corresponding camera;
   an evaluating unit for calculating a time delay for each of the multiple cameras by evaluating the difference between the corrected, offset, timestamps of the video streams from the multiple cameras with respect to the frames in which the decoded reference clock value is changed; and
   a set of delay buffers for applying the time delay to the video stream received from the corresponding camera based on the calculated time delay.
16. A multi-camera system comprising a plurality of cameras and a switcher device, wherein:
   each of the multiple cameras is configured to capture a first machine readable visual representation displayed on a display device, wherein the first machine readable visual representation represents a reference clock value;
   the switcher device is configured to receive from each of the multiple cameras a video stream of the first machine readable visual representation, wherein the video stream includes an image of the first machine readable visual representation captured by the camera, and each frame of the video stream is associated with a streaming timestamp; and
   the switcher device is configured to calibrate the streaming timestamp of the video stream received from the corresponding camera based on the image of the first machine readable visual representation contained in the video stream.
17. A display device for generating machine readable visual representations to synchronize video frames captured by multiple cameras, comprising:
   a receiving unit for receiving a reference clock value from a common time source;
   an encoder for periodically generating a first machine readable visual representation of the reference clock value; and
   a display for displaying the first machine readable visual representation to be captured by the multiple cameras,
   wherein the first machine readable visual representation enables a switcher device to calibrate a streaming timestamp of a video stream received from the corresponding camera based on an image of the first machine readable visual representation contained in the video stream.

## Claims

1. A method for synchronizing video frames captured by multiple cameras, the method comprising the steps of:
capturing a first machine readable visual representation displayed on at least one display device by each of the multiple cameras, wherein the first machine readable visual representation represents a reference clock value;
receiving from each of the multiple cameras a video stream by a switcher device, wherein the video stream includes an image of the first machine readable visual representation captured by the camera, and each frame of the video stream is associated with a streaming timestamp; and
calibrating the streaming timestamp of the video stream received from the corresponding camera based on the image of the first machine readable visual representation contained in the video stream.

2. The method according to claim 1, wherein the reference clock value is received by the at least one display device from a common time source.

3. The method according to any preceding claim, wherein the first machine readable visual representation is periodically generated by the at least one display device.

4. The method according to any preceding claim, wherein the step of calibrating the streaming timestamp of the video stream further comprises:
decoding by the switcher device the reference clock value from the image of the first machine readable visual representation contained in each video stream;
detecting by the switcher device a change of the decoded reference clock value contained in each video stream; and
calculating a time offset for each of the multiple cameras by evaluating the difference between the streaming timestamps of the video streams from the multiple cameras with respect to the frames in which the decoded reference clock value is changed.

5. The method according to claim 4, further comprising the steps of:
adding the calculated time offset to correct the streaming timestamp of the video stream received from the corresponding camera;
calculating a time delay for each of the multiple cameras by evaluating the difference between the corrected streaming timestamps of the video frames simultaneously captured by the multiple cameras; and
applying the time delay to the video stream received from the corresponding camera based on the calculated time delay.

6. The method according to claim 4, further comprising the steps of:
obtaining a plurality of additional time offsets by repeatedly capturing additional machine readable visual representations by the multiple cameras and calculating additional time offsets for each of the multiple cameras based on the additionally captured machine readable visual representations;
averaging the plurality of time offsets obtained for each of the multiple cameras; and adding the averaged time offsets to correct the streaming timestamp of the video stream received from the corresponding camera.

7. The method according to any preceding claim, further comprising the step of:
displaying on the display device a second machine readable visual representation which is associated with the first machine readable visual representation;
wherein a completed change of the first machine readable visual representation is detected by the switcher device based on a change of the second machine readable visual representation.

8. The method according to claim 7, wherein the second machine readable visual representation is the display background of the display device and changes upon a completed change of the first machine readable visual representation.

9. The method according to any preceding claim, further comprising the step of:
generating an audio signal by the display device which is associated with the first machine readable visual representation;
wherein a completed change of the first machine readable visual representation is detected by the switcher device based on the audio signal.

10. The method according to any preceding claim, wherein the first machine readable visual representation is a graphic code, a data matrix code, a Quick Response code or a bar code.

11. The method according to any preceding claim, wherein the time source is a local system clock, a time server on a network, or a Global Positioning System master clock.

12. A computer program product comprising computer readable instructions which, when loaded onto a computer, configure the computer to perform a method according to any preceding claim.

13. A switcher device, comprising:
a receiving unit for acquiring video streams from multiple cameras, wherein each video stream captures a first machine readable visual representation displayed on a display device; wherein the first machine readable visual representation represents a reference clock value received by the display device from a time source and is periodically generated by the display device; wherein each frame of the video stream is associated with a streaming timestamp;
a decoder for decoding the reference clock value from the first machine readable visual representation contained in each video stream;
a detecting unit for detecting a change of the first machine readable visual representation in each video stream; and
a subtracting unit for calculating a time offset for each of the multiple cameras by evaluating the difference between the streaming timestamps of the video streams from the multiple cameras with respect to the frames in which the decoded reference clock value is changed.

14. A multi-camera system comprising a plurality of cameras and a switcher device, wherein:
each of the multiple cameras is configured to capture a first machine readable visual representation displayed on a display device, wherein the first machine readable visual representation represents a reference clock value;
the switcher device is configured to receive from each of the multiple cameras a video stream of the first machine readable visual representation, wherein the video stream includes an image of the first machine readable visual representation captured by the camera, and each frame of the video stream is associated with a streaming timestamp; and
the switcher device is configured to calibrate the streaming timestamp of the video stream received from the corresponding camera based on the image of the first machine readable visual representation contained in the video stream.

15. A display device for generating machine readable visual representations to synchronize video frames captured by multiple cameras, comprising:
a receiving unit for receiving a reference clock value from a common time source;
an encoder for periodically generating a first machine readable visual representation of the reference clock value; and
a display for displaying the first machine readable visual representation to be captured by the multiple cameras;
wherein the first machine readable visual representation enables a switcher device to calibrate a streaming timestamp of a video stream received from the corresponding camera based on an image of the first machine readable visual representation contained in the video stream.
